# EUROPÄISCHE PATENTANMELDUNG

(11) **EP 4 046 737 A1**
(43) Veröffentlichungstag der Anmeldung: **24.08.2022**
(21) Anmeldenummer: 21157820.8
(22) Anmeldetag: 18.02.2021
(51) Int. Cl.: B23K 9/095, G01C 5/06

(54) **SCHWEISSVORRICHTUNG UND SCHWEISSVERFAHREN ZUR DURCHFÜHRUNG EINES SCHWEISSPROZESSES**

(71) Anmelder: FRONIUS INTERNATIONAL GmbH, 4643 Pettenbach (AT)
(72) Erfinder: KORNFELDNER, Mario, 4643 Pettenbach (AT); FRIEDL, Helmut, 4643 Pettenbach (AT)
(74) Vertreter: SONN Patentanwälte OG

(57) **Zusammenfassung**

Die Erfindung betrifft eine Schweißvorrichtung (1) und ein Schweißverfahren zur Durchführung eines Schweißprozesses mit einer Schweißstromquelle (2) und einem damit verbundenen Schweißbrenner (3), welcher während des Schweißprozesses über zumindest ein zu bearbeitendes Werkstücks (W) bewegbar ist, wobei zumindest ein Sensor (4) zur Erfassung der Position und bzw. oder der Bewegung des Schweißbrenners (3) während des Schweißprozesses vorgesehen ist, welcher zumindest eine Sensor (4) mit einer Auswerteeinrichtung (5) verbunden ist. Erfindungsgemäß ist zumindest ein Sensor (4) zur Erfassung der Position und bzw. oder der Bewegung des Schweißbrenners (3) durch einen mechanisch mit dem Schweißbrenner (3) in Verbindung stehenden mobilen barometrischen Drucksensor (6) zur Erfassung der Bewegung des Schweißbrenners (3) zumindest in vertikaler Richtung (z) gebildet, und zumindest ein weiterer stationärer barometrischer Drucksensor (7) zum Abgleich des mobilen barometrischen Drucksensors (6) vorgesehen.

## Beschreibung

Die Erfindung betrifft eine Schweißvorrichtung zur Durchführung eines Schweißprozesses mit einer Schweißstromquelle und einem damit verbundenen Schweißbrenner, welcher während des Schweißprozesses über zumindest ein zu bearbeitendes Werkstück bzw. entlang zumindest eines zu bearbeitenden Werkstücks bewegbar ist, wobei zumindest ein Sensor zur Erfassung der Position und bzw. oder der Bewegung des Schweißbrenners während des Schweißprozesses vorgesehen ist, welcher zumindest eine Sensor mit einer Auswerteeinrichtung verbunden ist.

Weiters betrifft die Erfindung ein Schweißverfahren zur Durchführung eines Schweißprozesses, wobei ein mit einer Schweißstromquelle verbundener Schweißbrenner über zumindest ein zu bearbeitendes Werkstück bzw. entlang zumindest eines zu bearbeitenden Werkstücks bewegt wird, und während des Schweißprozesses die Position und bzw. oder die Bewegung des Schweißbrenners mit zumindest einem Sensor erfasst und in einer Auswerteeinrichtung verarbeitet wird.

Die Schweißvorrichtung und das Schweißverfahren sind insbesondere aber nicht ausschließlich auf manuelle Schweißprozesse, bei welchen der Schweißbrenner händisch über das zumindest eine zu bearbeitende Werkstück bewegt wird und beispielsweise Zusatzmaterial auf das Werkstück aufgetragen oder die Werkstücke miteinander verbunden werden, gerichtet. Die Erfindung kann aber auch bei automatischen Schweißvorrichtungen und Schweißverfahren, bei welchen der Schweißbrenner mithilfe eines Schweißroboters oder eines anderen Manipulators über das zumindest eine Werkstück bewegt wird, angewendet werden. Unter Schweißvorrichtungen und Schweißverfahren fallen auch Lötvorrichtungen und Lötverfahren, bei welchen ein Zusatzwerkstoff, das sogenannte Lot, mit Hilfe eines Lichtbogens aufgeschmolzen wird, es aber im Gegensatz zum Schweißen zu keiner wesentlichen Aufschmelzung des Werkstücks kommt.

Für die Qualität eines Schweißergebnisses ist es zumindest bei nicht horizontal verlaufenden Schweißbahnen, insbesondere bei vertikal verlaufenden Schweißbahnen, essentiell, in welche Richtung der Schweißbrenner über das zumindest eine Werkstück bewegt wird. Darüber hinaus ist bei Schweißprozessen, bei welchen mehrere Unterprozesse mit Pausen dazwischen durchlaufen werden, die Reihenfolge der einzelnen Unterprozesse für das Endergebnis des Schweißprozesses wichtig. Zu diesem Zweck wird häufig die Position und bzw. oder die Bewegung des Schweißbrenners während des Schweißprozesses erfasst und für die automatische Beurteilung der Qualität eines Schweißergebnisses verwendet. Beispielsweise wird die Bewegung oder Lage des Schweißbrenners mithilfe von Beschleunigungssensoren oder Gyrosensoren erfasst und für die Nachverfolgung des Schweißprozesses zu Dokumentationszwecken oder der Navigation verwendet. Sensoren zur Erfassung der Lage oder Bewegung können auch auf anderen Komponenten einer Schweißvorrichtung, wie zum Beispiel einer Fernbedienung oder einem Schweißhandschuh angeordnet werden. Über die Erfassung der Bewegungs- und Positionsdaten kann beispielsweise die Einhaltung der gewünschten Schweißnahtfolge automatisch überprüft werden.

Beispielsweise beschreibt die WO 2007/009131 A1 ein Schweißverfahren und ein Schweißsystem, bei welchem die Position des Schweißbrenners im dreidimensionalen Raum über einen Sender und zumindest einen Sensor im Schweißbrenner bestimmt wird. Die für die Positionsbestimmung notwendigen Komponenten sind relativ aufwändig und teuer.

Aus der EP 1 812 200 B2 ist eine Schweißvorrichtung bekannt geworden, bei welcher Sensoren zur Erfassung der Lage des Schweißbrenners vorgesehen sind, um in Abhängigkeit der erfassten Lage Schweißparameter regeln zu können.

Auch die EP 3 581 313 A1 beschreibt einen Schweißbrenner mit einem Sensor zur Erfassung der Bewegung und Lage, woraus die Schweißgeschwindigkeit und der Anstellwinkel des Schweißbrenners berechnet werden kann.

Nachteilig ist bei bekannten Beschleunigungssensoren die Ermittlung des während des Schweißprozesses zurückgelegten Weges aufgrund der notwendigen zweifachen Integration des Sensorsignals und die resultierende Drift des Messsignals. Da Beschleunigungssensoren für eine Messwertänderung in der Regel eine bestimmte Geschwindigkeitsänderung pro Zeiteinheit und/oder eine bestimmte Beschleunigungsänderung pro Zeiteinheit benötigen, ist eine genaue Schweißnahtverfolgung auf Grund der beim Schweißprozess auftretenden geringen Schweißgeschwindigkeiten und/oder geringen Beschleunigungen und/oder deren zeitlichen Änderungen nur bedingt möglich. Eine Bestimmung einer translatorischen Positionsänderung im Raum ist über Gyrosensoren (Drehrichtungssensoren) oder Kompasssensoren nicht messbar. Mit Hilfe von Gyrosensoren oder Kompasssensoren können Winkelgeschwindigkeiten und Winkel im Raum erfasst werden. Insbesondere Kompasssensoren können durch das Magnetfeld des Lichtbogens gestört werden.

Barometrische Drucksensoren zur Messung der Höhe bzw. Position in vertikaler Richtung sind in jüngerer Zeit in kostengünstiger und platzsparender Bauweise erhältlich, sodass auch eine Anwendung beispielsweise in Mobiltelefonen möglich ist. Dadurch kann eine Ortung zusätzlich zur GPS-Ortung in vertikaler Richtung verbessert werden und beispielsweise eine raschere Auffindung in Hochhäusern ermöglicht werden. Höhensensoren sind bisher nur vereinzelt im Schweißbereich zur Anwendung gekommen.

Beispielsweise beschreibt die US 2009/0159576 A1 eine Schweißvorrichtung, wobei der Atmosphärendruck gemessen wird, um die Betriebsparameter des Schweißbrenners an die Umgebungsbedingungen anpassen zu können.

Die US 2016/0358503 A1 beschreibt eine Schweißvorrichtung zu Übungszwecken, wobei ein Höhensensor zur Erfassung der Position des Schweißbrenners angewendet wird.

Schließlich beschreibt die US 2017/0266868 A1 ein bewegbares Nahtschweißgerät, welches zur Positionsbestimmung und Datenauswertung Sensoren aufweist, welche auch durch einen barometrischen Drucksensor gebildet sein können.

Eine Erfassung der Bewegung eines Schweißbrenners zur Beurteilung der Bewegungsrichtung in vertikaler Richtung oder zur Beurteilung der Schweißnahtfolge mithilfe eines barometrischen Drucksensors ist jedoch nicht bekannt.

Die Aufgabe der vorliegenden Erfindung besteht in der Schaffung einer oben genannten Schweißvorrichtung sowie eines oben genannten Schweißverfahrens, mit welchen die Bewegung des Schweißbrenners zumindest in vertikaler Richtung erfasst werden kann, um die Bewegungsrichtung des Schweißbrenners beim Schweißprozess überwachen zu können. Insbesondere soll beurteilt werden können, ob während des Schweißprozesses fallend oder steigend geschweißt wird, da fallend oder steigend geschweißte Schweißnähte deutliche Unterschiede hinsichtlich ihrer Struktur und ihrer Eigenschaften aufweisen. Die Realisierung der Schweißvorrichtung und Durchführung des Schweißverfahrens soll möglichst einfach und kostengünstig sein. Nachteile des Standes der Technik sollen vermieden oder zumindest reduziert werden.

Gelöst wird die erfindungsgemäße Aufgabe durch eine oben genannte Schweißvorrichtung, bei welcher zumindest ein Sensor zur Erfassung der Position und bzw. oder der Bewegung des Schweißbrenners durch einen mechanisch mit dem Schweißbrenner in Verbindung stehenden mobilen barometrischen Drucksensor zur Erfassung der Bewegung des Schweißbrenners zumindest in vertikaler Richtung gebildet ist, und dass zumindest ein weiterer stationärer barometrischer Drucksensor zum Abgleich des mobilen barometrischen Drucksensors vorgesehen ist. Erfindungsgemäß wird durch die Verwendung zumindest zweier barometrischer Drucksensoren als Höhensensoren die Bewegung des Schweißbrenners zumindest in vertikaler Richtung, also in z-Richtung, erfasst. Dadurch, dass ein barometrischer Drucksensor im Schweißbrenner oder einer mechanisch mit dem Schweißbrenner in Verbindung stehenden Komponente angeordnet ist, kann die Bewegung des Schweißbrenners in vertikaler Richtung erfasst werden. Zum notwendigen Abgleich des zumindest einen mobilen barometrischen Drucksensors ist zumindest ein weiterer stationärer barometrischer Drucksensor vorgesehen. Der Druckunterschied der zumindest zwei Drucksensoren kann beispielsweise über ein Differenzdruckverfahren in Echtzeit oder quasi in Echtzeit ausgewertet werden. Durch die Möglichkeit des Abgleichs können Umwelteinflüsse, welche bisher die Sensorsignale barometrischer Drucksensoren sehr stark beeinflusst haben, eliminiert oder zumindest stark reduziert werden. Dadurch ist in einfacher und kostengünstiger Weise eine Überprüfung der Richtung der Bewegung des Schweißbrenners in der Vertikalachse möglich. Somit kann die Schweißvorrichtung dazu verwendet werden, den Schweißer beim manuellen Schweißprozess zu führen oder den Schweißprozess zu Dokumentations- oder Qualitätsüberwachungszwecken zu erfassen. Durch die besonders kleine Baugröße moderner barometrischer Drucksensoren können diese besonders einfach in den gewünschten Komponenten der Schweißvorrichtung angeordnet und die Schweißvorrichtung auch kostengünstig ausgeführt werden.

Ferner wäre es auch möglich, spezielle Differenzdrucksensoren zu verwenden, welche Drücke in Gas oder insbesondere Luft führenden Leitungen und bzw. oder Bypass-Leitungen und bzw. oder flüssigkeitsgefüllten Leitungen, wie beispielsweise Kühlflüssigkeitsleitungen, messtechnisch erfassen und bei Bewegungen, insbesondere Höhenänderungen, des Schweißbrenners Druckunterschiede aufzeichnen können. Ein derartiges Messprinzip ist vergleichbar mit dem Prinzip einer Schlauchwaage, wobei je nach Anwendung die Enden des Schlauchs offen oder geschlossen ausgeführt werden können.

Gemäß einem Merkmal der Erfindung ist zumindest ein mobiler barometrischer Drucksensor am Schweißbrenner angeordnet, insbesondere lösbar mit dem Schweißbrenner verbunden. Beispielsweise kann der zumindest eine mobile barometrische Drucksensor und die notwendige elektronische Schaltung und Energieversorgung in einem Gehäuse angeordnet sein, welches in geeigneter Weise mit dem Gehäuse des Schweißbrenners verbunden werden kann. Das Sensorsignal des mobilen barometrischen Drucksensors kann über eine Leitung an die Auswerteeinrichtung oder auch drahtlos übertragen werden. In letztem Fall ist die für die drahtlose Übertragung notwendige Elektronik vorzugsweise im Sensorgehäuse angeordnet. Die Auswerteeinrichtung befindet sich vorzugsweise in der Schweißstromquelle oder ist durch die in der Schweißstromquelle üblicherweise ohnedies vorhandene Steuereinrichtung gebildet. Ferner kann die Auswerteeinrichtung ebenso in einer externen Peripheriekomponente, wie beispielsweise einem Drahtvorschub oder in einer Aufnahme zur Definition einer Referenzposition angeordnet sein.

Zumindest ein mobiler barometrischer Drucksensor kann auch oder alternativ zum Schweißbrenner in einem Armband, einem Schweißhandschuh, einer Smartwatch und bzw. oder einer Schweißbekleidung angeordnet sein. Bei der Auswahl des Orts der Anordnung des mobilen barometrischen Drucksensors ist darauf zu achten, dass dieser im Wesentlichen der Bewegung des Schweißbrenners folgt, sodass die Bewegung des Schweißbrenners zumindest in vertikaler Richtung mithilfe des Drucksensors bestimmt werden kann. Demgemäß muss das Armband, die Smartwatch oder der Schweißhandschuh natürlich entsprechend der Händigkeit oder Präferenz des Schweißers ausgewählt werden. Bei automatisierten Schweißvorrichtungen kann der mobile barometrische Drucksensor auch im Schweißroboter oder Manipulator, welcher den Schweißbrenner über das Werkstück bewegt, angeordnet oder darin integriert sein.

Der zumindest eine stationäre barometrische Drucksensor ist vorzugsweise in der Schweißstromquelle angeordnet. Da die Schweißstromquelle während des Schweißprozesses in der Regel ortsfest bleibt und sich in der Nähe des über das Schlauchpaket verbundenen Schweißbrenners befindet, stellt das einen bevorzugten Ort für die Anordnung des stationären barometrischen Drucksensors dar. Darüber hinaus ist die Nähe zur Auswerteeinrichtung, welche sich üblicherweise in der Schweißstromquelle befindet oder durch die in der Schweißstromquelle enthaltene Steuereinrichtung gebildet ist, vorteilhaft.

Vorteilhafterweise ist eine Aufnahme für den Schweißbrenner oder dgl. in einer zu dem zumindest einen stationären barometrischen Drucksensor definierten Referenzposition vorgesehen, in welche Referenzposition der Schweißbrenner oder dgl. zum Abgleich des zumindest einen mobilen barometrischen Drucksensors bringbar ist. Durch eine solche Aufnahme kann eine definierte Position des mit einem mobilen barometrischen Drucksensors ausgestatteten Schweißbrenners zum Zwecke des Abgleichs des mobilen barometrischen Drucksensors mit Hilfe des zumindest einen stationären barometrischen Drucksensors erzielt werden. Natürlich sind auch für anderswo angeordnete mobile barometrische Drucksensoren geeignete Aufnahmen denkbar. Beispielsweise kann auch auf der Schweißstromquelle eine Aufnahme für eine Smartwatch, welche einen mobilen barometrischen Drucksensor enthält, vorgesehen sein, um den Abgleich in geeigneter Weise durchführen zu können. Die Aufnahme ist so designt, dass der Schweißbrenner oder eine andere den mobilen barometrischen Drucksensor enthaltende Komponente der Schweißvorrichtung einfach und eindeutig angeordnet werden kann.

Wenn eine Einrichtung zur Erkennung der Referenzposition des Schweißbrenners vorgesehen ist, kann automatisch beim Erreichen der Referenzposition der Abgleichvorgang gestartet werden und es muss dieser nicht extra veranlasst werden. Während des Abgleichs wird das Sensorsignal des zumindest einen mobilen barometrischen Drucksensors mit dem Sensorsignal des zumindest einen stationären barometrischen Drucksensors verglichen und gegebenenfalls angepasst. Während des Abgleichs befindet sich der zumindest eine mobile barometrische Drucksensor in einer stationären Referenzposition zum stationären barometrischen Drucksensor.

Die Einrichtung zur Erkennung der Referenzposition des Schweißbrenners kann beispielsweise durch einen optischen Sensor, insbesondere ein optisches Kamerasystem, durch einen mechanischen Schalter, durch einen kapazitiven Sensor, durch einen induktiven Sensor, durch einen Ultraschallsensor, und bzw. oder durch einen Gewichtssensor gebildet sein. Je nach Konstruktion der Aufnahme für den Schweißbrenner oder einer anderen einen mobilen barometrischen Drucksensor aufweisenden Komponente der Schweißvorrichtung können verschiedene Erkennungseinrichtungen angeordnet sein. Im einfachsten Fall wird bei der Anordnung des Schweißbrenners in der dafür vorgesehenen Aufnahme ein mechanischer Schalter betätigt, welcher der Auswerteeinrichtung anzeigt, dass die Referenzposition erreicht wurde und der Abgleich durchgeführt werden kann.

Gemäß einem weiteren Merkmal der Erfindung ist die Auswerteeinrichtung dazu ausgebildet, nach Ablauf einer vorgegebenen Zeitdauer nach Durchführung eines Abgleichs eine Aufforderung zum Abgleich des zumindest einen mobilen barometrischen Drucksensors abzugeben. Die vorgegebene Zeitdauer kann nach Erfahrungswerten gewählt und innerhalb dieser Zeitdauer ein Abgleich erzwungen werden. Die Aufforderung zur Durchführung eines Abgleichs kann beispielsweise akustisch, optisch oder auch mechanisch über Vibrationen durch geeignete Signale erfolgen. Durch das akustische, optische oder mechanische Signal kann dem Schweißer signalisiert werden, dass ein Abgleich fällig ist. Bei automatisierten Schweißvorrichtungen kann die Aufforderung auch gleich eine automatische Bewegung des Schweißbrenners in die Aufnahme bzw. Referenzposition und die automatische Durchführung des Abgleichs sein.

Zusätzlich oder alternativ dazu kann auch bei Abweichung des Sensorsignals des zumindest einen stationären barometrischen Drucksensors von einem vorgegebenen Grenzwert in einer vorgegebenen Zeitspanne eine Aufforderung zum Abgleich des zumindest einen mobilen barometrischen Drucksensors erfolgen. Eine große Abweichung des Sensorsignals während einer bestimmten Zeitspanne kann eine starke Veränderung der Umgebungsbedingungen bedeuten, welche einen Abgleich des zumindest einen barometrischen Drucksensors notwendig machen kann, um verlässliche Sensorsignale und somit verlässliche Aussagen über die Bewegung des Schweißbrenners zumindest in vertikaler Richtung machen zu können.

Schließlich kann auch der Unterschied des Sensorsignals eines mobilen barometrischen Drucksensors vom Sensorsignal eines stationären barometrischen Drucksensors als Bedingung für die Durchführung eines Abgleichs herangezogen werden. Wenn das Sensorsignal des stationären barometrischen Drucksensors nämlich zu stark vom Sensorsignal eines mobilen barometrischen Drucksensors abweicht und eine bestimmte vorgegebene Differenz überschreitet, kann das ein Anzeichen für einen Messfehler oder ein Anzeichen für eine starke Veränderung der Umgebungsbedingungen sein, welches einen Abgleich notwendig machen kann.

Wenn zumindest ein Beschleunigungssensor im Schweißbrenner angeordnet und mit der Auswerteeinrichtung verbunden ist, kann zusätzlich zur genauen Erfassung der Bewegung des Schweißbrenners in vertikaler Richtung auch eine Erfassung der Bewegung in anderen Richtungen ermöglicht werden. Durch die Kombination der Höhenmessung mithilfe der zumindest zwei barometrischen Drucksensoren und der Bewegungsmessung mithilfe des Beschleunigungssensors kann eine noch genauere Nachverfolgung der Bewegung des Schweißbrenners während des Schweißprozesses erzielt werden.

Vorteilhafterweise ist die Auswerteeinrichtung mit einem Speicher, insbesondere mit einem Cloudspeicher, und bzw. oder mit einem Netzwerk verbunden. Dadurch können die Messwerte für eine spätere Verwendung oder zu Dokumentationszwecken gespeichert werden oder an übergeordneten beliebigen Stellen oder Zentralen innerhalb des Netzwerks eingesehen oder bearbeitet werden. Die gespeicherten Daten können auch mit Hilfe eines geeigneten Algorithmus oder einem lernfähigen System beispielsweise für zukünftige Kurzzeit- oder Langzeitanalysen oder zur Bestimmung von Grenzwerten verwendet und auch mit externen Daten aus demselben oder anderen Speichern abgeglichen oder kombiniert werden.

Wenn die Auswerteeinrichtung mit einer Anzeige verbunden ist, können die Höhenwerte der mobilen barometrischen Drucksensoren zumindest in vertikaler Richtung angezeigt werden. Die Anzeige kann in der Nähe des Schweißers, beispielsweise an der Schweißstromquelle aber auch am Schweißbrenner oder einer übergeordneten Schweißzentrale angeordnet sein. Anstelle der absoluten oder relativen Höhenwerte in vertikaler Richtung kann auch nur die Schweißrichtung (steigend oder fallend), beispielsweise in Form eines (nach oben oder unten weisenden) Pfeils an der Anzeige, beispielsweise auch einer Anzeige in einer Brille oder in einem Schweißhelm, dargestellt werden.

Gelöst wird die erfindungsgemäße Aufgabe auch durch ein oben genanntes Schweißverfahren, bei welchem die Bewegung des Schweißbrenners während des Schweißprozesses zumindest in vertikaler Richtung mit Hilfe zumindest eines mit dem Schweißbrenner mechanisch in Verbindung stehenden mobilen barometrischen Drucksensors erfasst wird, und der zumindest eine mobile barometrische Drucksensor mit Hilfe zumindest eines stationären barometrischen Drucksensors abgeglichen wird. Ein solches Verfahren ist einfach und kostengünstig durchführbar. Zu den weiteren dadurch erzielbaren Vorteilen wird auf die obige Beschreibung der Schweißvorrichtung verwiesen.

Der zumindest eine mobile barometrische Drucksensor wird vorzugsweise so abgeglichen, dass der Schweißbrenner oder dgl. in eine zu dem zumindest einen stationären barometrischen Drucksensor definierte Referenzposition gebracht wird, wodurch der mobile barometrische Drucksensor zu einem temporär stationären Drucksensor wird und die Signale des zumindest einen stationären barometrischen Drucksensors und des zumindest einen temporär stationären barometrischen Drucksensors in einer Auswerteeinrichtung ausgewertet werden.

Vorzugsweise wird der zumindest eine mobile barometrische Drucksensor vor jedem Schweißprozess abgeglichen.

Der zumindest eine mobile barometrische Drucksensor kann auch abgeglichen werden, wenn eine vorgegebene Zeitdauer nach dem letzten Abgleich abgelaufen ist, wenn das Sensorsignal des zumindest einen stationären barometrischen Drucksensors von einem vorgegebenen Grenzwert in einer vorgegebenen Zeitspanne abweicht, und bzw. oder wenn das Sensorsignal eines mobilen barometrischen Drucksensors vom Sensorsignal eines stationären barometrischen Drucksensors eine vorgegebene Differenz überschreitet.

Wenn die Bewegung des Schweißbrenners während des Schweißprozesses mithilfe eines Beschleunigungssensors erfasst wird, kann der Schweißprozess noch besser überwacht werden.

Die Bewegung des Schweißbrenners zumindest in vertikaler Richtung kann beispielsweise zu Dokumentationszwecken während des Schweißprozesses gespeichert werden. Auf diese Weise kann ein Höhenprofil des zumindest einen mobilen barometrischen Drucksensors erstellt werden und gegebenenfalls später mit geeigneten Algorithmen ausgewertet werden.

Wenn die Sensorsignale des zumindest einen mobilen barometrischen Drucksensors und bzw. oder die Sensorsignale des zumindest einen stationären barometrischen Drucksensors in einem Speicher, insbesondere einem Cloudspeicher, gespeichert und bzw. oder in ein Netzwerk übertragen werden, können sie für spätere Verarbeitungen aufgehoben oder für Verarbeitungen an beliebigen Stellen innerhalb des Netzwerkes übertragen werden.

Vorzugsweise werden die Sensorsignale des zumindest einen mobilen barometrischen Drucksensors und bzw. oder die Sensorsignale des zumindest einen stationären barometrischen Drucksensors in der Auswerteeinrichtung verarbeitet, und werden in der Auswerteeinrichtung insbesondere die vorgegebenen Grenzwerte des Sensorsignals des zumindest einen stationären barometrischen Drucksensor in einer vorgegebenen Zeitspanne ermittelt.

Beispielsweise kann in der Auswerteinrichtung ein Profil, insbesondere ein Höhenprofil, des zumindest einen barometrischen Drucksensors erstellt werden.

Die Bewegung des Schweißbrenners zumindest in vertikaler Richtung kann auch während des Schweißprozesses angezeigt werden.

Die vorliegende Erfindung wird anhand der beigefügten Zeichnungen näher erläutert. Darin zeigen:
- Fig. 1: ein Blockschaltbild einer manuellen Schweißvorrichtung des Standes der Technik;
- Fig. 2: ein schematisches Blockschaltbild einer erfindungsgemäßen Schweißvorrichtung mit zwei barometrischen Drucksensoren zur Bestimmung der Bewegung oder der Position des Schweißbrenners in vertikaler Richtung;
- Fig. 3: verschiedene Einrichtungen zur Erkennung der Referenzposition des Schweißbrenners bei Anordnung in der Aufnahme;
- Fig. 4: ein Flussdiagramm zur Veranschaulichung des Abgleichvorgangs des mobilen barometrischen Drucksensors;
- Fig. 5: ein schematisches Blockschaltbild einer erfindungsgemäßen Schweißvorrichtung mit drei barometrischen Drucksensoren;
- Fig. 6: das Sensorsignal eines mobilen barometrischen Drucksensors während des Schweißens einer vertikalen Steignaht;
- Fig. 7: das Sensorsignal eines mobilen barometrischen Drucksensors während des Schweißens einer horizontal angeordneten Schweißnaht;
- Fig. 8: das Sensorsignal eines mobilen barometrischen Drucksensors während des Schweißens einer leicht fallenden Schweißnaht; und
- Fig. 9: das Sensorsignal eines mobilen barometrischen Drucksensors während des Schweißens einer leicht steigenden Schweißnaht.

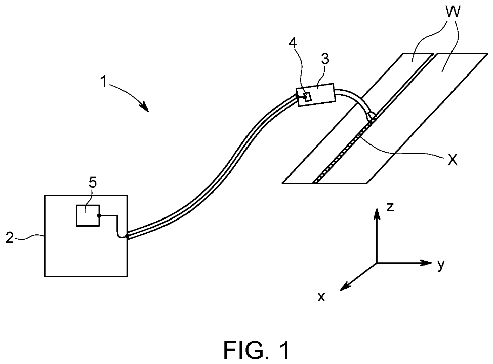

Fig. 1 zeigt ein Blockschaltbild einer manuellen Schweißvorrichtung 1 des Standes der Technik. Die Schweißvorrichtung 1 dient zur Durchführung eines Schweißprozesses an zumindest einem Werkstück W, indem ein mit einer Schweißstromquelle 2 verbundener Schweißbrenner 3 während des Schweißprozesses manuell über das zumindest eine zu bearbeitendes Werkstücks W entlang einer gewünschten Schweißbahn X bewegt wird. Während des Schweißprozesses kann beispielsweise eine Verbindung zweier Werkstücke W hergestellt oder eine Beschichtung (sogenanntes "Cladding") auf die Oberfläche eines Werkstücks W aufgebracht oder ein Auftragsschweißprozess, wie beispielsweise WAAM (Wire-Arc Additive Manufacturing), durchgeführt werden. Im Schweißbrenner 3 kann zumindest ein Sensor 4 zur Erfassung der Position und bzw. oder der Bewegung des Schweißbrenners 3 während des Schweißprozesses vorgesehen sein. Der Sensor 4 kann auch an einer anderen Stelle als dem Schweißbrenner 3 angeordnet sein, vorausgesetzt diese andere Stelle macht die Bewegungen des Schweißbrenners 3 mit. Beispielsweise kann ein Sensor 4 in oder an einem Armband, welches der Schweißer trägt, angeordnet sein (nicht dargestellt). Der Sensor 4 kann beispielsweise durch einen Beschleunigungssensor im Schweißbrenner 3 gebildet sein. Auch andere Methoden zur Erfassung der Position und bzw. oder der Bewegung des Schweißbrenners 3, beispielsweise Kamerasysteme (nicht dargestellt), sind ebenfalls denkbar. Der zumindest eine Sensor 4 ist mit einer Auswerteeinrichtung 5 verbunden, welche beispielsweise in der Schweißstromquelle 2 angeordnet sein kann und auch durch eine ohnedies vorhandene Steuereinrichtung der Schweißstromquelle 2 gebildet sein kann. Die Erfassung der Bewegung des Schweißbrenners 3 ist insbesondere für die Qualitätskontrolle wichtig, wobei die Bewegung in vertikaler Richtung (z-Richtung) besonders starken Einfluss auf die Schweißqualität hat. Aufgrund der Schwerkraft verhält sich das geschmolzene Metall unterschiedlich, wenn die Schweißnaht steigend, also von unten nach oben, oder fallend, also von oben nach unten geschweißt wird. Dementsprechend ist die Kenntnis der Bewegung des Schweißbrenners 3 zumindest in vertikaler Richtung (z-Richtung) zur Überwachung des Schweißprozesses wichtig. Darüber hinaus ist die Erfassung der Bewegung des Schweißbrenners 3 während eines mehrere Unterschweißprozesse umfassenden Schweißprozesses für die Kontrolle der richtigen Reihenfolge der Unterschweißprozesse (Schweißnahtfolge) wichtig. Diese Kontrolle bzw. die Dokumentation kann beispielsweise auch über ein Assistenzsystem erfolgen.

Bei einer automatischen Schweißvorrichtung 1 wird der Schweißbrenner 3 durch einen Schweißroboter oder einen anderen Manipulator entlang oder über das zumindest eine zu bearbeitende Werkstück W geführt (nicht dargestellt).

Herkömmliche Sensoren 4 zur Erfassung der Position und bzw. oder der Bewegung des Schweißbrenners 3 sind oft ungenau oder sehr aufwändig und dementsprechend teuer.

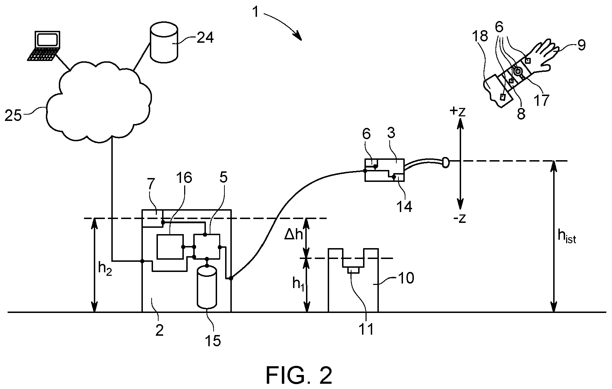

Fig. 2 zeigt ein schematisches Blockschaltbild einer erfindungsgemäßen Schweißvorrichtung 1 mit zwei barometrischen Drucksensoren 6, 7 zur Bestimmung der Bewegung oder der Position des Schweißbrenners 3 in vertikaler Richtung (z-Richtung). Erfindungsgemäß ist hier der Sensor 4 zur Erfassung der Position und bzw. oder der Bewegung des Schweißbrenners 3 durch einen Höhensensor in Form zumindest eines mobilen barometrischen Drucksensors 6 gebildet. Der mobile barometrische Drucksensor 6 steht mechanisch mit dem Schweißbrenner 3 in Verbindung und erfasst demnach die Bewegung des Schweißbrenners 3 zumindest in vertikaler Richtung z. Der mobile barometrische Drucksensor 6 kann am Schweißbrenner 3 angeordnet, insbesondere lösbar mit dem Schweißbrenner 3 verbunden sein, sodass er die jeweilige Höhe hᵢₛₜ, in der sich der Schweißbrenner 3 befindet, misst. Natürlich kann der mobile barometrische Drucksensor 6 auch im Schweißbrenner 3 integriert und fest verbaut sein. Wie dargestellt, kann der zumindest eine mobile barometrische Drucksensor 6 auch in oder an einem Armband 8 angeordnet sein, welches der Schweißer an jener Hand, mit dem er den Schweißbrenner 3 führt, trägt. Weitere Positionen für den mobilen barometrischen Drucksensor sind ein Schweißhandschuh 9, einer Smartwatch 17 und bzw. oder eine Schweißbekleidung 18, beispielsweise der Ärmel einer Schweißjacke.

Moderne barometrische Drucksensoren sind in besonders kleiner Baugröße erhältlich und erlauben eine relativ hohe Auflösung der Höhenmessung, wodurch eine Anwendung auch in der Schweißtechnik zur Bestimmung der Bewegung eines Schweißbrenners 3 zumindest in vertikaler Richtung z vorteilhaft ist. Da jedoch barometrische Drucksensoren unter anderem stark von den Umgebungsbedingungen abhängen und auch die Abweichung des Sensorsignals mit der Zeit nicht unproblematisch ist, muss der zumindest eine barometrische Drucksensors 6 regelmäßig abgeglichen werden, um zuverlässige Messergebnisse zu garantieren. Erfindungsgemäß ist daher zusätzlich zu dem zumindest einen barometrischen Drucksensor 6 zumindest ein weiterer, stationärer barometrischer Drucksensor 7 zum Abgleich des mobilen barometrischen Drucksensors 6 vorgesehen. Der stationäre barometrische Drucksensor 7 ist in einer bekannten Höhe h₂ zu einer Bezugsgröße, beispielsweise dem Untergrund, angeordnet. Vorzugsweise wird für alle im System verbauten barometrischen Drucksensoren 6, 7 die gleiche Bezugsgröße verwendet. Durch die Verwendung zumindest zweier barometrischer Drucksensoren 6, 7, wobei ein mobiler barometrischer Drucksensor 6 mechanisch mit dem Schweißbrenner 3 in Verbindung steht und ein stationärer barometrischer Drucksensor 7 zum Abgleich des zumindest einen mobilen barometrischen Drucksensors 6 an einer geeigneten Stelle der Schweißvorrichtung 1 angeordnet ist, werden verlässliche Messwerte für die Bewegung des Schweißbrenners 3 zumindest in vertikaler Richtung z erhalten. Somit ist in einfacher und kostengünstiger Weise eine Überprüfung der Richtung der Bewegung des Schweißbrenners 3 zumindest in vertikaler Richtung z möglich. Die Schweißvorrichtung 1 kann dazu verwendet werden, den Schweißer beim manuellen Schweißprozess zu führen oder den Schweißprozess zu Dokumentations- oder Qualitätsüberwachungszwecken zu erfassen.

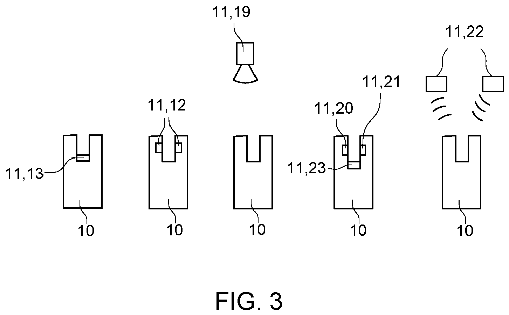

Der zumindest eine stationäre barometrische Drucksensor 7 ist vorzugsweise in der Schweißstromquelle 2 angeordnet. Beim Abgleichvorgang für den mobilen barometrischen Drucksensor 6 wird dieser in eine definierte Höhe zum stationären barometrischen Drucksensor 7 gebracht und der Abgleich durch die Auswerteeinrichtung 5 durchgeführt. Zur Unterstützung des Abgleichs des zumindest einen barometrischen Drucksensors 6 ist vorzugsweise eine Aufnahme 10 für den Schweißbrenner 3 in einer zum stationären barometrischen Drucksensor 7 definierten Referenzposition vorgesehen. Die Aufnahme 10 ist beispielsweise in einer Höhe h₁ angeordnet, welche gleich der Höhe h₂ des stationären barometrischen Drucksensors 7 entspricht oder sich zumindest in einer Bekannten Höhendifferenz Δh dazu befindet. Beim Abgleichvorgang wird der den mobilen barometrischen Drucksensor 6 enthaltende Schweißbrenner 3 in diese Aufnahme 10 gebracht, wodurch sich der mobile barometrische Drucksensor 6 in einer definierten Position zum stationären barometrischen Drucksensor 7 befindet. In dieser definierten Referenzposition kann der Abgleich des mobilen barometrischen Drucksensors 6 durchgeführt werden. Wenn ein mobiler barometrischer Drucksensor 6 an einer anderen Stelle, beispielsweise in einer Smartwatch 17, platziert ist, kann die Aufnahme 10 auch für diese den mobilen barometrischen Drucksensor enthaltende Smartwatch 17 ausgebildet sein. Ferner ist es möglich, dass bei einem Abgleich in der Aufnahme 10 auch Umgebungsparameter, wie beispielsweise die Wetterlage, der Luftdruck, die Luftfeuchtigkeit, sogenannte MAK (Maximale Arbeitsplatz Konzentration)-Werte, CO₂-Werte, CO-Werte, Aerosol-Werte, Temperaturen und/oder die Position abgeglichen werden. Hierbei kann ein bidirektionaler Datenaustausch möglich sein und die Daten und/oder Messwerte im Anschluss oder in Echtzeit zur Ansteuerung unterschiedlichster externer Geräte, wie beispielsweise einer Absaugung, verwendet werden, um die Gesundheit des Schweißers nicht zu gefährden. Um vorzugsweise automatisch die Anordnung des Schweißbrenners 3 in der Referenzposition erkennen zu können, ist in der Aufnahme 10 vorzugsweise eine Einrichtung 11 zur Erkennung der Referenzposition des Schweißbrenners 3 vorgesehen. Diese Erkennungseinrichtung 11 kann verschiedenartig ausgebildet sein (siehe Fig. 3). Sobald das Erreichen der Referenzposition des Schweißbrenners 3 oder dgl. vorzugsweise automatisch erkannt wird, startet die Auswerteeinrichtung 5, je nach Präferenz des Schweißers, entweder manuell oder automatisch den Abgleichvorgang für den mobilen barometrischen Drucksensor 6. Durch den Abgleich liefert der zumindest eine mobile barometrische Drucksensor verlässliche Messwerte, wodurch zumindest eine verlässliche Aussage darüber getroffen werden kann, ob der Schweißbrenner 3 steigend in (+z)-Richtung oder fallend in (-z)-Richtung verwendet wird. Hierbei kann eine steigend oder fallend geschweißte Naht, beispielsweise auf einer Anzeige 16, welche mit der Auswerteeinrichtung 5 verbunden ist, in Form von Pfeilen in Echtzeit angezeigt werden.

Im Schweißbrenner 3 oder an einer anderen geeigneten Stelle, kann auch zumindest ein Beschleunigungssensor 14 angeordnet sein, um neben der Bewegung in z-Richtung auch die Bewegung in anderen Richtungen im Raum erfassen zu können. Dieser zumindest eine Beschleunigungssensor ist ebenfalls mit der Auswerteeinrichtung 5 verbunden. Die Auswerteeinrichtung 5 kann mit einem Speicher 15 verbunden sein. Der Speicher 15 kann in der Schweißstromquelle 2 enthalten sein. Darüber hinaus kann die Auswerteeinrichtung 5 auch mit einem Cloudspeicher 24, der sich an einem beliebigen Ort befindet und bzw. oder mit einem Netzwerk 25, insbesondere dem Internet, verbunden sein. Somit können die relevanten Daten, beispielsweise die Sensorsignale der barometrischen Drucksensoren 6, 7 und allenfalls der Beschleunigungssensoren 14 an beliebige Stellen zur Dokumentation oder Verarbeitung weitergeleitet werden. Die gemessenen oder in einem Speicher 15 oder einem Cloudspeicher 24 abgelegten Daten können auch mit Hilfe geeigneter Algorithmen oder lernfähigen Systemen beispielsweise für zukünftige Kurzzeit- oder Langzeitanalysen oder zur Bestimmung von Grenzwerten verwendet und auch mit externen Daten aus anderen Speichern abgeglichen oder kombiniert werden.

In der definierten Referenzposition in der Aufnahme 10 können auch die Winkelpositionen und translatorischen Positionen des Schweißbrenners 3 oder dgl., welche mit zusätzlichen Sensoren, wie beispielsweise den Beschleunigungssensoren 14 oder auch Gyrosensoren oder Kompasssensoren (nicht dargestellt) gemessen werden, abgeglichen werden. Diese unterschiedlichen Sensoren im Schweißbrenner 3 oder dgl. Können in der Referenzposition auch in jeder erdenklichen Kombination miteinander bzw. untereinander abgeglichen werden. In der Referenzposition können auch die Richtungen des Schweißbrenners 3 oder dgl. im Raum, insbesondere auch unter Zuhilfenahme entsprechender CAD-Daten, abgeglichen werden. In der Referenzposition sind vorzugsweise Umgebungsparameter, wie Magnetfeld, Luftfeuchtigkeit, Lufttemperatur, Luftdruck, Verschmutzung, etc., bekannt und können für einen Abgleich verwendet werden. Die Umgebungsparameter können auch in einem Speicher 15 oder einem Cloudspeicher 24 gespeichert und für weitere Aufgaben, wie beispielsweise einer Steuerung/Regelung einer Absaugung, einer Lüftung und/oder einer Heizung (nicht dargestellt) verwendet werden. In der Referenzposition kann auch die Geometrie des verwendeten Schweißbrenners 3, Rohrbogens, oder dgl. beispielsweise mittels gespeicherter CAD-Daten und geeigneter Sensoren, erkannt werden. Bei Erkennung einer falschen Geometrie des Schweißbrenners 3, Rohrbogens oder dgl. Können geeignete Signale ausgegeben werden, um beispielsweise Kollisionen und/oder Überlastungen des Schweißbrenners 3 oder dgl. und/oder Fehlmessungen des zumindest einen barometrischen Drucksensors 6 zu verhindern.

Aus Fig. 3 sind verschiedene Einrichtungen 11 zur Erkennung der Referenzposition des Schweißbrenners 3 bei Anordnung in der Aufnahme 10 erkennbar. In der von links gesehen ersten Skizze ist die Erkennungseinrichtung 11 durch einen mechanischen Schalter 13 gebildet, welcher bei Anordnung des Schweißbrenners 3 in der Aufnahme 10 betätigt wird. Der mechanische Schalter 13 ist mit der Auswerteeinrichtung 5 verbunden, wodurch die Betätigung des mechanischen Schalters 13 automatisch erkannt werden kann. Bei der nächsten Ausführungsvariante ist die Erkennungseinrichtung 11 durch einen optischen Sensor 12, beispielsweise einen Lichtschranken gebildet, welcher das Vorhandensein des Schweißbrenners 3 in der Aufnahme 10 entsprechend detektiert. Alternativ oder zusätzlich kann auch ein optisches Kamerasystem 19 angeordnet sein und detektieren, wenn der Schweißbrenner 3 in der Aufnahme 10 angeordnet ist. Andere Varianten der Erkennungseinrichtung 11 können beispielsweise durch kapazitive Sensoren 20, induktive Sensoren 21, Gewichtssensoren 23 oder durch einen Ultraschallsensor 22, der beispielsweise einen Ultraschallsender und einen Ultraschallempfänger beinhaltet, gebildet sein.

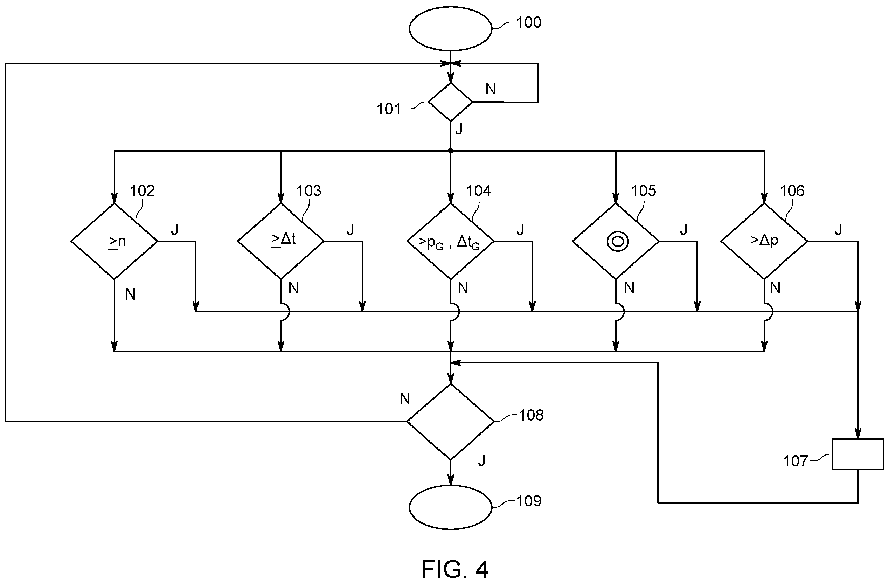

Fig. 4 zeigt ein Flussdiagramm zur Veranschaulichung des Abgleichvorgangs des mobilen barometrischen Drucksensors 6. Nach dem Start 100 des Abgleichvorgangs erfolgt gemäß Block 101 die Abfrage, ob der mobile barometrische Drucksensor 6 die Referenzposition erreicht hat. Wurde die Referenzposition nicht erreicht, wird die Abfrage 101 wiederholt. Sobald die Referenzposition erreicht wurde, sind verschiedene Voraussetzungen für den Abgleichvorgang parallel dargestellt (Blöcke 102 bis 106). Gemäß Block 102 wird der Abgleichvorgang nach einer definierten Anzahl n von Schweißprozessen vorgenommen. Bei Block 103 erfolgt der Abgleichvorgang, wenn eine vorgegebene Zeitdauer Δt nach dem letzten Abgleich abgelaufen ist. Gemäß Block 104 wird der Abgleich des mobilen barometrischen Drucksensors 6 dann vorgenommen, wenn das Sensorsignal des zumindest einen stationären barometrischen Drucksensors 7 von einem vorgegebenen Grenzwert p_{G} in einer vorgegebenen Zeitspanne Δt_{G} abweicht. Dies wäre ein Anzeichen für eine Veränderung der Umgebungsbedingungen, welche einen neuerlichen Abgleich erforderlich macht. Es kann der Abgleich auch dann vorgenommen werden, wenn durch den Schweißer oder eine übergeordnete Stelle eine entsprechende Aufforderung festgelegt wird, beispielsweise ein Bedienungselement betätigt wird (Block 105). Schließlich kann der Abgleich gemäß Block 106 auch dann vorgenommen werden, wenn das Sensorsignal eines mobilen barometrischen Drucksensors 6 vom Sensorsignal eines stationären barometrischen Drucksensors 7 eine vorgegebene Differenz Δp überschreitet und der Messwert unglaubwürdig ist. Ferner kann der Abgleich gemäß Block 106 auch dann vorgenommen werden, wenn eine Anforderung einer externen Datenquelle dazu auffordert. Eine derartige Anforderung könnte zum Beispiel durch eine Wetter-App erfolgen. Ist eine der Bedingungen gemäß den Blöcken 102 bis 106 erfüllt, wird der Abgleich des mobilen barometrischen Drucksensors 6 durchgeführt (Block 107). Beim Abgleichvorgang wird das Signal des zumindest einen mobilen barometrischen Drucksensors mit Hilfe eines geeigneten Algorithmus ausgewertet bzw. mit dem Signal des zumindest einen stationären barometrischen Drucksensors 7 abgeglichen. Anschließend wird in einer Abfrage (Block 108) abgefragt, ob der Prozess beendet werden soll. Ist keine der Bedingungen gemäß den Blöcken 102 bis 106 erfüllt, wird ebenfalls in einer Abfrage (Block 108) abgefragt, ob der Prozess beendet werden soll. Im Falle der Verneinung wird wieder zum Beginn des Programms zur Abfrage 101 gesprungen, andernfalls das Programm beendet (Block 109). Ein derartiger Abgleichvorgang kann relativ einfach softwaretechnisch in der Auswerteeinrichtung 5 oder einer externen Steuerung hinterlegt werden.

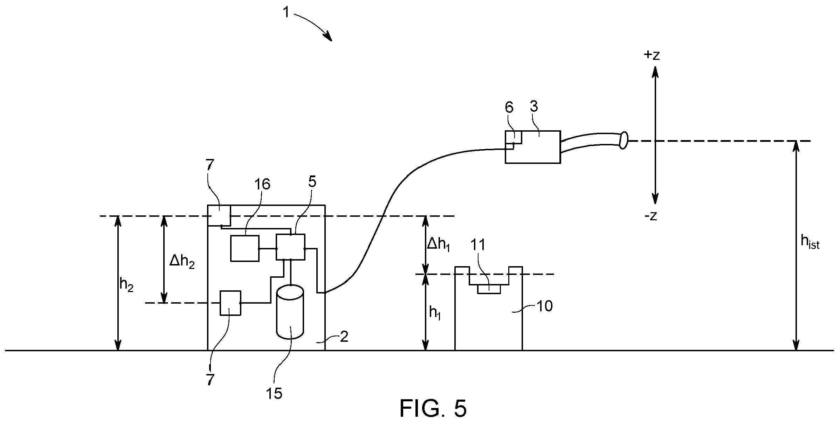

Fig. 5 zeigt ein schematisches Blockschaltbild einer erfindungsgemäßen Schweißvorrichtung 1, wobei im Gegensatz zur Variante gemäß Fig. 2 zwei stationäre barometrische Drucksensoren 7 vorgesehen sind. Neben dem bereits in Fig. 2 beschriebenen stationären barometrischen Drucksensor 7 ist ein weiterer stationärer barometrischer Drucksensor 7 in der Schweißstromquelle 2 angeordnet, welcher in einer Höhendifferenz Δh₂ zum ersten stationären barometrischen Drucksensor 7 angeordnet ist. Beispielsweise kann die Abweichung der Sensorsignale der beiden stationären barometrischen Drucksensoren 7 als Indiz für einen Fehler oder als Voraussetzung für die Durchführung eines Abgleichvorgangs für den mobilen barometrischen Drucksensor herangezogen werden.

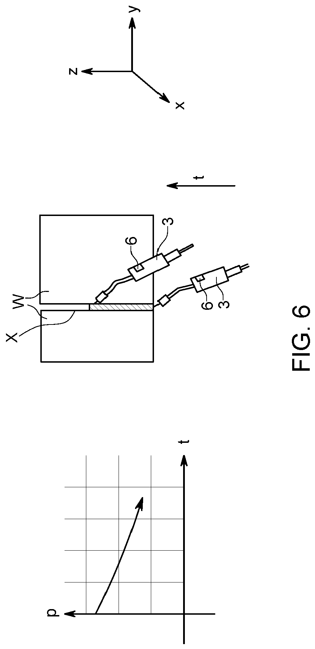

In Fig. 6 ist das Sensorsignal eines mobilen barometrischen Drucksensors 6 bzw. der Druck p während des Schweißens einer vertikalen Steignaht (in (+z)-Richtung) aufgetragen. Beim Schweißen einer Steignaht wird der Schweißbrenner 3 mit dem mobilen barometrischen Drucksensor 6 im Wesentlichen vertikal in (+z)-Richtung entlang der Schweißbahn X am Werkstück W nach oben bewegt. Während dieser Bewegung fällt der Druck p, welcher durch den am Schweißbrenner 3 angeordneten oder in diesem integrierten mobilen barometrischen Drucksensor 6 gemessen wird, ab. Der zeitliche Verlauf des Drucks p(t) ist also durch eine Gerade mit negativem Anstieg repräsentiert. Die Abbildung zeigt ein Druckhöhenprofil des mit dem mobilen barometrischen Drucksensors 6 aufgenommenen Drucks p. Dabei wurde der mobile barometrische Drucksensor 6 durch einen Abgleich mit dem Signal zumindest eines stationären Drucksensors 7 abgeglichen bzw. in der Referenzposition in Verbindung gebracht, wie weiter oben beschrieben wurde.

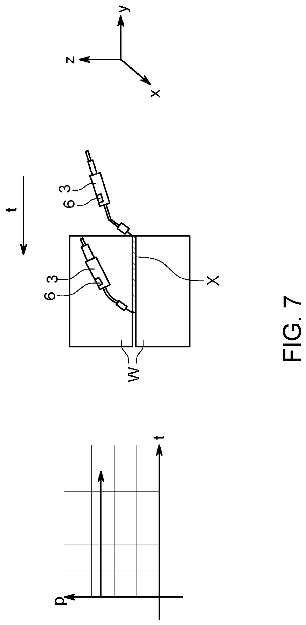

Fig. 7 zeigt das Sensorsignal eines mobilen barometrischen Drucksensors 6 während des Schweißens einer horizontal angeordneten Schweißnaht (in (-y)-Richtung). Beim Schweißen einer horizontalen Schweißbahn X auf einem Werkstück W wird der Schweißbrenner 3 mit dem mobilen barometrischen Drucksensor 6 im Wesentlichen horizontal in der durch die x-Richtung und y-Richtung aufgespannten Ebene bewegt. Während dieser Bewegung bleibt der Druck p, welcher durch den am Schweißbrenner 3 angeordneten oder in diesem integrierten mobilen barometrischen Drucksensor 6 gemessen wird, im Wesentlichen konstant. Der zeitliche Verlauf des Drucks p(t) ist also durch eine im Wesentlichen horizontale Gerade repräsentiert, da keine Höhenänderung in z-Richtung erfolgt.

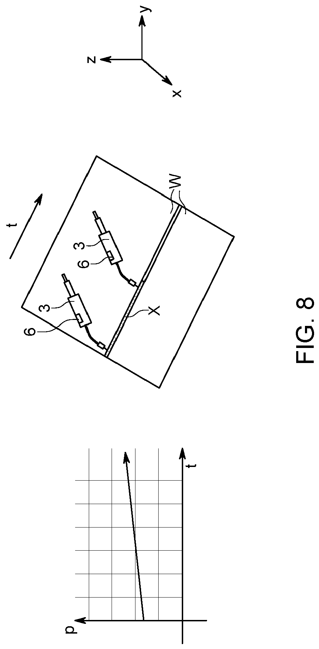

Aus Fig. 8 ist das Sensorsignal eines mobilen barometrischen Drucksensors 6 während des Schweißens einer leicht fallenden Schweißnaht (in (-z)- und (+y)-Richtung) ersichtlich. Beim Schweißen einer leicht fallenden Schweißnaht wird der Schweißbrenner 3 mit dem mobilen barometrischen Drucksensor 6 im Wesentlichen vertikal in einer negativen z-Richtung entlang der Schweißbahn X am Werkstück W bewegt. Während dieser Bewegung steigt der Druck p. Der zeitliche Verlauf des Drucks p(t) ist also durch eine Gerade mit positivem Anstieg repräsentiert.

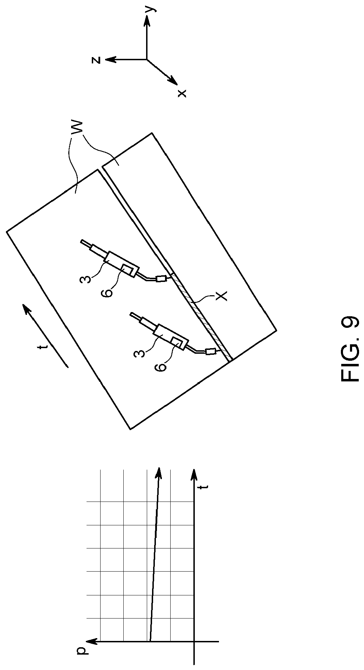

Schließlich zeigt Fig. 9 das Sensorsignal eines mobilen barometrischen Drucksensors 6 während des Schweißens einer leicht steigenden Schweißnaht (in (+z)- und (+y)-Richtung). Beim Schweißen einer leicht steigenden Schweißnaht wird der Schweißbrenner 3 mit dem mobilen barometrischen Drucksensor 6 im Wesentlichen vertikal in einer positiven z-Richtung entlang der Schweißbahn X am Werkstück W bewegt. Während dieser Bewegung sinkt der Druck p. Der zeitliche Verlauf des Drucks p(t) ist also durch eine Gerade mit negativem Anstieg repräsentiert.

Die vorliegende Erfindung ermöglicht in einfacher und kostengünstiger Weise die Erkennung der Bewegung des Schweißbrenners 3 zumindest in z-Richtung, wodurch rasch und einfach festgestellt werden kann, ob während des Schweißprozesses eine steigende oder fallende Schweißnaht geschweißt wird.

## Patentansprüche

1. Schweißvorrichtung (1) zur Durchführung eines Schweißprozesses mit einer Schweißstromquelle (2) und einem damit verbundenen Schweißbrenner (3), welcher während des Schweißprozesses über zumindest ein zu bearbeitendes Werkstücks (W) bewegbar ist, wobei zumindest ein Sensor (4) zur Erfassung der Position und bzw. oder der Bewegung des Schweißbrenners (3) während des Schweißprozesses vorgesehen ist, welcher zumindest eine Sensor (4) mit einer Auswerteeinrichtung (5) verbunden ist, **dadurch gekennzeichnet, dass** zumindest ein Sensor (4) zur Erfassung der Position und bzw. oder der Bewegung des Schweißbrenners (3) durch einen mechanisch mit dem Schweißbrenner (3) in Verbindung stehenden mobilen barometrischen Drucksensor (6) zur Erfassung der Bewegung des Schweißbrenners (3) zumindest in vertikaler Richtung (z) gebildet ist, und dass zumindest ein weiterer stationärer barometrischer Drucksensor (7) zum Abgleich des mobilen barometrischen Drucksensors (6) vorgesehen ist.

2. Schweißvorrichtung (1) nach Anspruch 1, **dadurch gekennzeichnet, dass** zumindest ein mobiler barometrischer Drucksensor (6) am Schweißbrenner (3) angeordnet ist, insbesondere lösbar mit dem Schweißbrenner (3) verbunden.

3. Schweißvorrichtung (1) nach Anspruch 1 oder 2, **dadurch gekennzeichnet, dass** zumindest ein mobiler barometrischer Drucksensor (6) in einem Armband (8), einem Schweißhandschuh (9), einer Smartwatch (17) und bzw. oder einer Schweißbekleidung (18) angeordnet ist.

4. Schweißvorrichtung (1) nach einem der Ansprüche 1 bis 3, **dadurch gekennzeichnet, dass** der zumindest eine stationäre barometrische Drucksensor (7) in der Schweißstromquelle (2) angeordnet ist.

5. Schweißvorrichtung (1) nach einem der Ansprüche 2 bis 4, **dadurch gekennzeichnet, dass** eine Aufnahme (10) für den Schweißbrenner (3) oder dgl. in einer zu dem zumindest einen stationären barometrischen Drucksensor (7) definierten Referenzposition vorgesehen ist, in welche Referenzposition der Schweißbrenner (3) oder dgl. zum Abgleich des zumindest einen mobilen barometrischen Drucksensors (6) bringbar ist.

6. Schweißvorrichtung (1) nach einem der Ansprüche 1 bis 5, **dadurch gekennzeichnet, dass** eine Einrichtung (11) zur Erkennung der Referenzposition des Schweißbrenners (3) vorgesehen ist.

7. Schweißvorrichtung (1) nach Anspruch 6, **dadurch gekennzeichnet, dass** die Erkennungseinrichtung (11) durch einen optischen Sensor (12), insbesondere ein optisches Kamerasystem (19), durch einen mechanischen Schalter (13), durch einen kapazitiven Sensor (20), durch einen induktiven Sensor (21), durch einen Ultraschallsensor (22), und bzw. oder durch einen Gewichtssensor (23) gebildet ist.

8. Schweißvorrichtung (1) nach einem der Ansprüche 1 bis 7, **dadurch gekennzeichnet, dass** zumindest ein Beschleunigungssensor (14) im Schweißbrenner (3) angeordnet und mit der Auswerteeinrichtung (5) verbunden ist.

9. Schweißvorrichtung (1) nach einem der Ansprüche 1 bis 8, **dadurch gekennzeichnet, dass** die Auswerteeinrichtung (5) mit einem Speicher (15), insbesondere mit einem Cloudspeicher (24), und bzw. oder mit einem Netzwerk (25) verbunden ist.

10. Schweißverfahren zur Durchführung eines Schweißprozesses, wobei ein mit einer Schweißstromquelle (2) verbundener Schweißbrenner (3) über zumindest ein zu bearbeitendes Werkstück (W) bewegt wird, und während des Schweißprozesses die Position und bzw. oder die Bewegung des Schweißbrenners (3) mit zumindest einem Sensor (4) erfasst und in einer Auswerteeinrichtung (5) verarbeitet wird, **dadurch gekennzeichnet, dass** die Bewegung des Schweißbrenners (3) während des Schweißprozesses zumindest in vertikaler Richtung (z) mit Hilfe zumindest eines mit dem Schweißbrenner (3) mechanisch in Verbindung stehenden mobilen barometrischen Drucksensors (6) erfasst wird, und der zumindest eine mobile barometrische Drucksensor (6) mit Hilfe zumindest eines stationären barometrischen Drucksensors (7) abgeglichen wird.

11. Schweißverfahren nach Anspruch 10, **dadurch gekennzeichnet, dass** der zumindest eine mobile barometrische Drucksensor (6) abgeglichen wird, indem der Schweißbrenner (3) in eine zu dem zumindest einen stationären barometrischen Drucksensor (7) definierte Referenzposition gebracht wird und die Signale des zumindest einen stationären barometrischen Drucksensors (6) und des zumindest einen stationären barometrischen Drucksensors (7) in einer Auswerteeinrichtung (5) ausgewertet werden.

12. Schweißverfahren nach Anspruch 10 oder 11, **dadurch gekennzeichnet, dass** der zumindest eine mobile barometrische Drucksensor (6) vor jedem Schweißprozess abgeglichen wird, und bzw. oder dann abgeglichen wird, wenn eine vorgegebene Zeitdauer (Δt) nach dem letzten Abgleich abgelaufen ist, und bzw. oder wenn das Sensorsignal des zumindest einen stationären barometrischen Drucksensors (7) von einem vorgegebenen Grenzwert (p_{G}) in einer vorgegebenen Zeitspanne (Δt_{G}) abweicht, und bzw. oder wenn das Sensorsignal eines mobilen barometrischen Drucksensors (6) vom Sensorsignal eines stationären barometrischen Drucksensors (7) eine vorgegebene Differenz (Δp) überschreitet.

13. Schweißverfahren nach einem der Ansprüche 10 bis 12, **dadurch gekennzeichnet, dass** die Bewegung des Schweißbrenners (3) zumindest in vertikaler Richtung (z) während des Schweißprozesses gespeichert wird.

14. Schweißverfahren nach einem der Ansprüche 10 bis 13, **dadurch gekennzeichnet, dass** die Sensorsignale des zumindest einen mobilen barometrischen Drucksensors (6) und bzw. oder die Sensorsignale des zumindest einen stationären barometrischen Drucksensors (7) in einem Speicher (15), insbesondere einem Cloudspeicher (24), gespeichert und bzw. oder in ein Netzwerk (25) übertragen werden.

15. Schweißverfahren nach einem der Ansprüche 10 bis 14, **dadurch gekennzeichnet, dass** die Sensorsignale des zumindest einen mobilen barometrischen Drucksensors (6) und bzw. oder die Sensorsignale des zumindest einen stationären barometrischen Drucksensors (7) in der Auswerteeinrichtung (5) verarbeitet werden, und in der Auswerteeinrichtung (5) insbesondere die vorgegebenen Grenzwerte (p_{G}) des Sensorsignals des zumindest einen stationären barometrischen Drucksensor (7) in einer vorgegebenen Zeitspanne (Δt_{G}) ermittelt werden.
